# EUROPEAN PATENT SPECIFICATION

(11) **EP 2 708 129 B1**
(45) Date of publication and mention of the grant of the patent: **07.11.2018**
(21) Application number: 13184459.9
(22) Date of filing: 13.09.2013
(51) Int. Cl.: A47J 37/01, A21B 3/15

(54) **Baking tray with interchangeable baking inserts**
Backblech mit auswechselbaren Backeinsätzen
Plateau de cuisson avec inserts de cuisson interchangeables

(30) Priority: 14.09.2012 US 201261701150 P
(43) Date of publication of application: 19.03.2014
(73) Proprietor: Tingley, Jason, Beavercreek, OH 45434 (US)
(72) Inventor: Tingley, Jason, Beavercreek, OH 45434 (US)
(74) Representative: Bailey, Sam Rogerson

(56) References cited:
- WO-A1-93/22925
- DE-U1- 29 905 978
- ES-A1- 2 171 100
- ES-U- 1 014 674
- US-A1- 2003 038 137
- US-A1- 2004 055 475

## Description

The present invention relates generally to an article of manufacture used for industrial baking applications, and more specifically to a baking pan or tray for use in industrial and commercial applications, wherein the baking surface or baking insert portion of the tray may be easily removed and replaced with another baking insert of the same or different design.

In further aspects, the invention relates to a system and method that may employ such an article.

Baking pans or trays are commonly used by producers of various baked goods that are supplied to restaurants and grocery stores. Because producers of baked goods often supply large quantities of baked goods to their customers, the trays such goods are baked on are reused many times and are repeatedly subjected to both high thermal and mechanical stresses. Repeated exposure to high temperatures and mechanical stress requires that an industrial baking pan or tray be manufactured from a durable material such as steel or aluminum. Although manufacturing a baking tray from materials such as steel or aluminum does increase the lifespan of the tray, repeated use, re-glazing, or other physical or chemical stressors eventually weakens the metal of the tray and cracks or fractures may appear in the metal surface of the tray. Once a tray has sustained such damage, it is no longer useable and must be discarded. Due to the significant expense of replacing industrial baking trays, additional features may be included to prolong the usable life of these trays. One such feature is a replaceable baking insert/surface that is attached to the body or frame of the tray. Documents WO9322925A1, US20040055475A1, ES1014674U and DE29905978U1 disclose baking trays with baking inserts according to the prior art.

Currently used industrial/commercial baking trays of this nature often include a baking surface that is attached to a frame by welding (permanent) or riveting (permanent/semi-permanent), making removal and replacement of the baking surface difficult and labor-intensive. Removal and replacement of the baking surface may require metalworking methods such as drilling or grinding and may create a food safety hazard by producing metal chips and/or fragments that remain on the tray following the replacement procedure. Because baking surface replacement is labor-intensive and very difficult, trays in need of repair are often shipped to the original tray manufacturer or to a metalworking professional for performance of this work. This aspect of the repair process may add such considerable time and expense that the trays are simply discarded rather than repaired, thereby creating environmental waste and other undesirable consequences. Therefore, there is an ongoing need for an industrial/commercial baking tray that may be quickly, effectively, and inexpensively repaired when the baking insert or baking surface thereof becomes unusable.

### SUMMARY OF THE INVENTION

The following provides a summary of certain exemplary embodiments of the present invention. This summary is not an extensive overview and is not intended to identify key or critical aspects or elements of the present invention or to delineate its scope.

In accordance with one aspect of the present invention, a first baking tray is provided. This baking tray includes a frame, wherein the frame has been adapted to support a baking insert; and a baking insert, wherein certain portions of the baking insert are received by the frame, and wherein other portions of the baking insert are detachably connected to the frame.

In accordance with another aspect of the present invention, a second baking tray is provided. This baking tray includes a frame having a left portion, a right portion, a front portion, and a rear portion; wherein the left and right portions each include a channel formed lengthwise therein; and wherein the front and rear portions each include a crossbar extending widthwise across the frame; and a baking insert having a left portion, a right portion, a front portion, and a rear portion; wherein the left and right portions each include a folded region, the geometry of which corresponds to the channels formed lengthwise in the frame; and wherein the front and rear portions each include at least one tab which is adapted to releasably engage the crossbars extending widthwise across the frame.

In yet another aspect of this invention, a baking tray system is provided. This baking tray system includes at least one frame having a left portion, a right portion, a front portion, and a rear portion; wherein the left and right portions each include a channel formed lengthwise therein; and wherein the front and rear portions each include a crossbar extending widthwise across the frame and; at least one baking insert having a left portion, a right portion, a front portion, and a rear portion; wherein the left and right portions each include a folded region, the geometry of which corresponds to the channels formed lengthwise in the frame; and wherein the front and rear portions each include a plurality of tabs that are adapted to releasably engage the crossbars extending widthwise across the frame. This system also includes at least one tool for connecting the tabs to the crossbars; and at least one tool for detaching the tabs from the crossbars.

Additional features and aspects of the present invention will become apparent to those of ordinary skill in the art upon reading and understanding the following detailed description of the exemplary embodiments.

### DESCRIPTION OF THE DRAWINGS

The accompanying drawings, which are incorporated into and form a part of the specification, schematically illustrate one or more exemplary embodiments of the invention and, together with the general description given above and detailed description given below, serve to explain the principles of the invention, and wherein:
FIG. 1 is a perspective view of a baking tray in accordance with a first exemplary embodiment of the present invention;
FIG. 2A is a perspective view of the frame component of the baking tray of FIG. 1;
FIG. 2B is a perspective view of the baking insert component of the baking tray of FIG. 1;
FIG. 3 is a perspective view of one end of the baking insert of the baking tray of FIG. 1 showing one of the tabs used to connect the baking insert to the frame;
FIG. 4 is a perspective view of a baking tray in accordance with a second exemplary embodiment of the present invention;
FIG. 5 shows a connecting tool being used to attach the baking insert to the frame by crimping the tab shown in FIG.3; and
FIG. 6 shows a detaching tool being used to disconnect the baking insert from the frame by loosening the tab shown in FIG. 3.

### DETAILED DESCRIPTION OF THE INVENTION

Exemplary embodiments of the present invention are now described with reference to the Figures. Although the following detailed description contains many specifics for purposes of illustration, a person of ordinary skill in the art will appreciate that many variations and alterations to the following details are within the scope of the invention. Accordingly, the following embodiments of the invention are set forth without any loss of generality to, and without imposing limitations upon, the claimed invention.

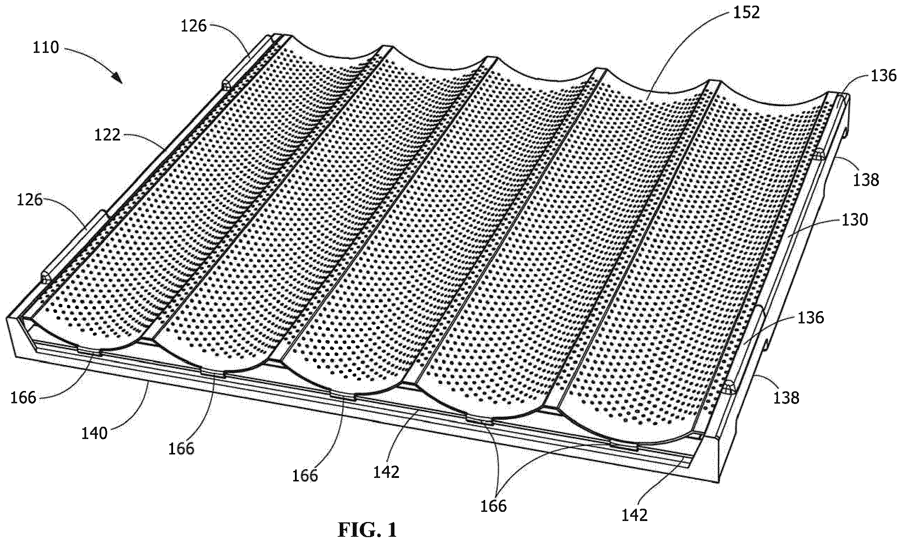

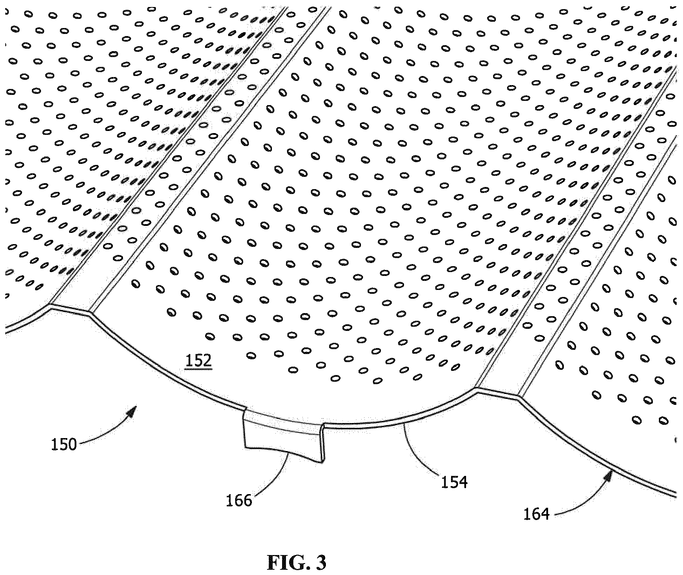

As previously stated, the present invention relates generally to an article of manufacture used for industrial baking applications, and more specifically to a baking pan or tray for use in industrial and commercial applications, wherein the baking surface or baking insert of the tray may be easily removed and replaced with another baking insert of the same or different general design. The present invention may be provided as a system that includes multiple frames; multiple interchangeable baking inserts, at least one tool for connecting the baking inserts to the frame; and at least one tool for detaching the baking inserts from the frame. This system allows baking inserts to be easily installed, removed, or changed from one baking surface type to another in a bakery environment without the use of metalworking or cutting tools that may create dangerous metal shards or metal fragments. The frames and baking inserts included with this invention are typically fabricated using known methodologies. With reference now to FIGS. 1-6, one or more exemplary embodiments of this invention will be described in greater detail.

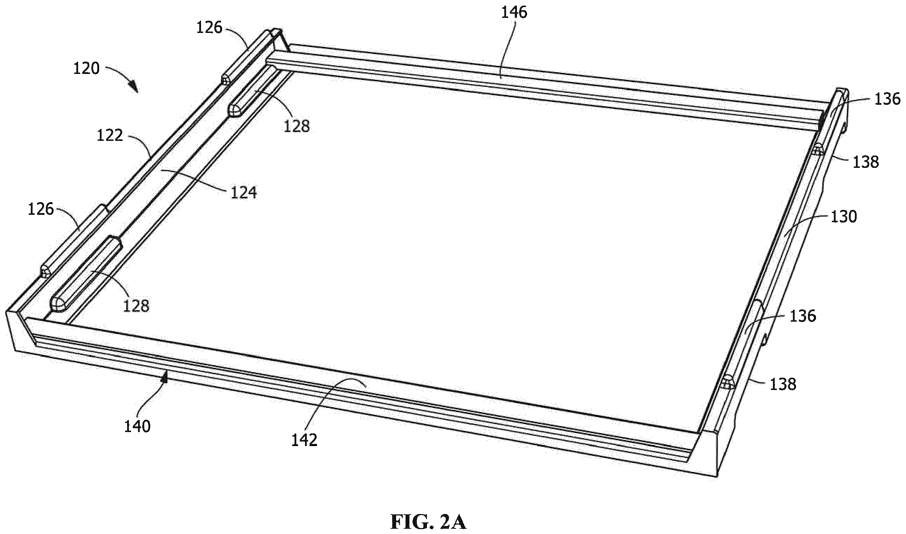

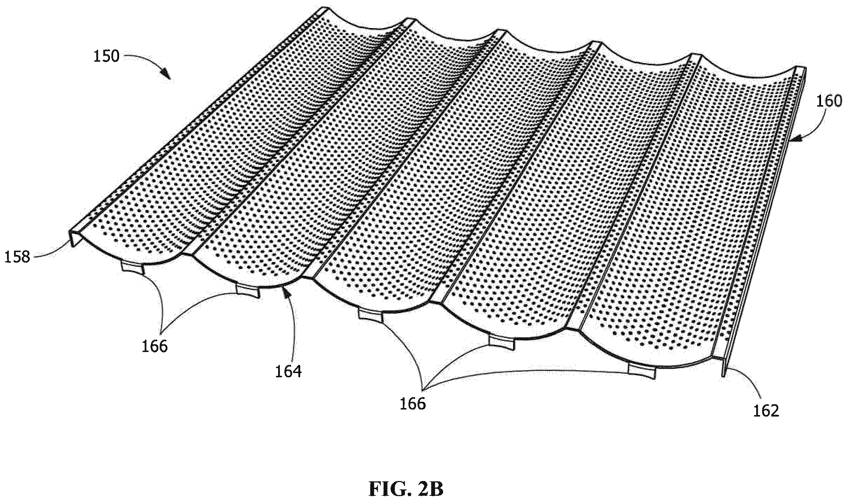

As best shown in FIGS. 1 and 2A-B, a first exemplary baking tray 110 includes metal frame 120 and metal baking insert 150, which is detachably connected to the frame. Frame 120 is generally rectangular in shape and includes left side portion 122, right side portion 130, front portion 140, and rear portion 144. Left side portion 122 further includes channel 124, protrusions 126, and indentations 128. Right side portion 130 further includes channel 132 (not shown), protrusions 136 and indentations 138. Front portion 140 further includes front crossbar 142; and rear portion 144 further includes rear crossbar 146. Baking insert 150, which is also rectangular in shape, includes baking surface 152 and plurality of elongated baking subunits 154 (useful for baguettes or the like), which may be substantially solid, or partially or completely perforated. Baking insert 150 further includes left side portion 156 having a first folded region 158; right side portion 160 having a second folded region 162; front portion 164 having a plurality of tabs 166; and a rear portion 168 also having a plurality of tabs 170 (not shown). As shown in FIG. 1, when baking tray 110 is properly assembled, first folded region 158 is inserted into channel 124; second folded region 162 is inserted into channel 132; tabs 166 are folded or crimped around front crossbar 142; and tabs 170 (not shown) are folded or crimped around rear crossbar 146.

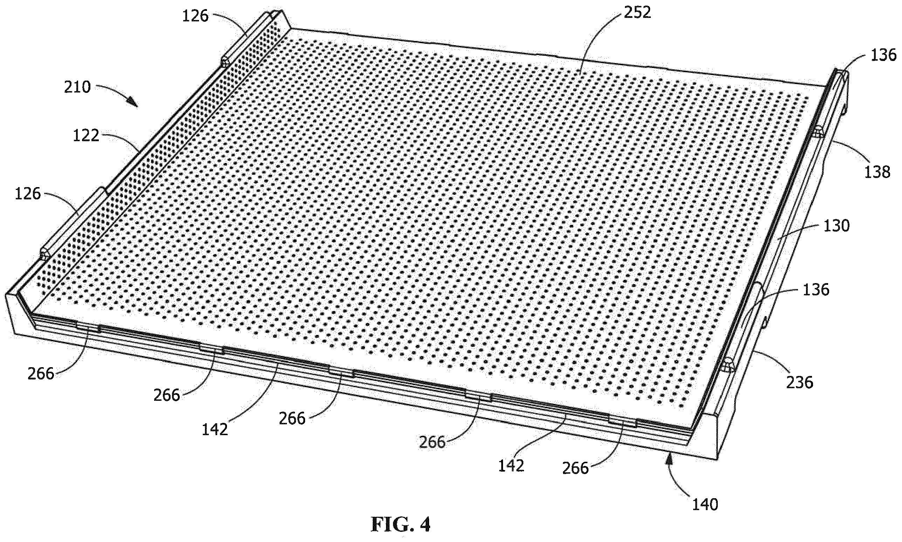

As shown in FIG. 4, a second exemplary baking tray 210 includes metal frame 120 and metal baking insert 250, which although different in configuration, is mounted on and attached to metal frame 120 in the same manner as the previously described embodiment. Frame 120 incudes left side portion 122, right side portion 130, front portion 140, and rear portion 144. Left side portion 122 further includes channel 124, protrusions 126, and indentations 128. Right side portion 130 further includes channel 132 (not shown), protrusions 136 and indentations 138. Front portion 140 further includes front crossbar 142, and rear portion 144 further includes rear crossbar 146. Baking insert 250 includes baking surface 252, which may be substantially solid or partially or completely perforated. Baking insert 250 further includes left side portion 256 having a first folded region 258; right side portion 260 having a second folded region 262; front portion 264 having a plurality of tabs 266; and a rear portion 268 also having a plurality of tabs 270 (not shown). As shown in FIG. 4, when baking tray 210 is properly assembled, first folded region 258 is inserted into channel 124; second folded region 262 is inserted into channel 132; tabs 266 are folded or crimped around front crossbar 142; and tabs 170 (not shown) are folded or crimped around rear crossbar 146.

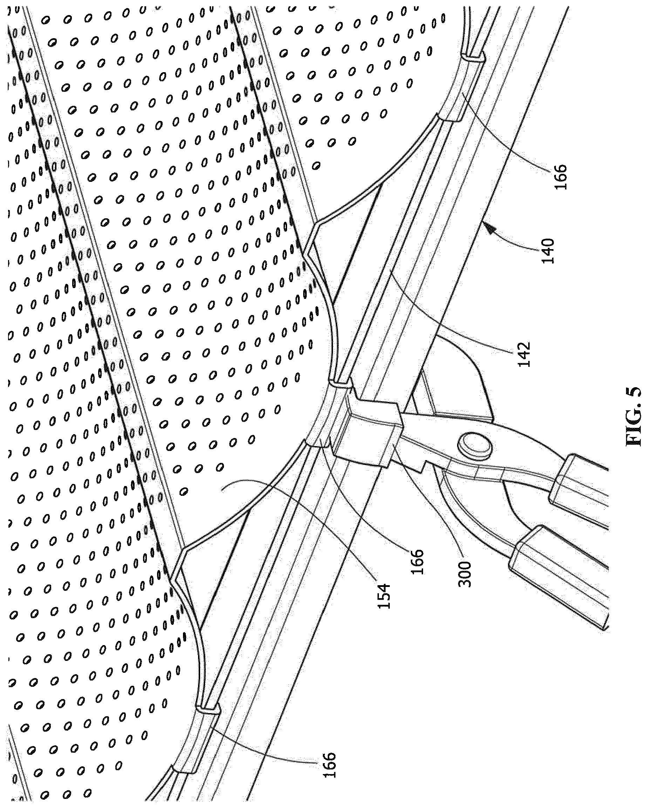

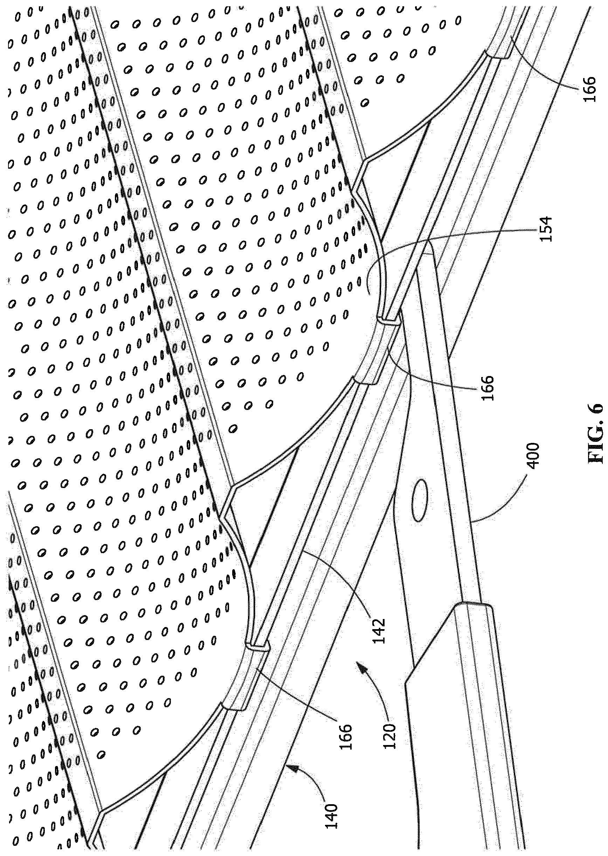

With reference to FIGS. 5 and 6, tabs 170 and 270 are typically attached to the crossbars of frame 120 using a crimping tool that has been designed specifically for use with the baking trays of the present invention, or that has been adapted for use with these trays. Similarly, tabs 170 and 270 are released from crossbars 142 and 146 using a prying or releasing tool that has been either designed specifically for use with the baking trays of the present invention, or that has been adapted for use with these trays. Removing the baking insert in this manner does not damage frame 120 and thus allows frame 120 to be used and re-used with various baking inserts that are replacements for damaged or worn baking inserts or that are intended to be used to create other types of baked goods. The baking trays of the present invention are also intended to be stackable, and protrusions 126 and 136 and indentations 128 and 138 are included on frame 120 to provide this feature. The indentations on the bottom of a tray receive the protrusions on the top of another tray and together these structures allow the baking trays of this invention to be securely stacked on top of one another.

## Claims

1. A baking tray (110,210), comprising:
(a) a frame (120) configured to support a baking insert (150,250); wherein said frame (120) includes a left portion (122), a right portion (130), a front portion (140), and a rear portion (144); and wherein the front and rear portions (140,144) each include a crossbar (142,146) extending widthwise across the frame (120); and
(b) a baking insert (150;250), wherein certain portions (158,162;258,262) of the baking insert are received by the frame (124,132), and wherein other portions (166,170, 266, 270) of the baking insert are detachably connected to the frame; wherein said baking inserts (150;250) includes a left portion (156;256), a right portion (160;260), a front portion (164;264), and a rear portion (168;268); **characterised in that** the outermost edges of the front and rear portions (164,168;264,268) of the baking insert (150;250) each include at least one tab (166) formed thereon prior to the attachment of the baking insert (150;250) to the frame (120), which tab (166) is adapted to be folded or crimped around a respective crossbar (142,146) to releasably engage said crossbars (142,146) extending widthwise across the frame.

2. The baking tray (110;210) of claim 1, wherein the left and right portions (120,122) each include a channel (124, 132) formed lengthwise therein; and wherein the left and right portions (156,160;256,260) of the baking insert (150;250) each include a folded region (158,162;258,262) the geometry of which corresponds to the channels (124,132) formed lengthwise in the frame, such that the folded regions (158,162;258,262) can be inserted into the corresponding channels (124,132) in the frame (120).

3. The baking tray (110;210) of claim 1, wherein the frame (120) further comprises a plurality of protrusions (126) and indentations (128) formed therein for allowing the baking tray to securely stack with other baking trays having corresponding protrusions (128), and indentations.

4. The baking tray of claim 3, wherein the left and right portions (122,130) of the frame each include at least one said protrusion (126) formed on the uppermost surface thereof, and at least one said indentation (128) formed in the bottommost surface thereof.

5. The baking tray (210) of any preceding claim, wherein the baking insert (250) has a single baking surface (252) formed thereon.

6. The baking tray (110) of any of claims 1 to 4, wherein the baking insert (150) has a plurality of individual baking subunits (154) formed therein.

7. The baking tray (110;210) of any preceding claim, wherein the baking insert (150;250) is perforated.

8. The baking tray (110;210) of any of claims 1 to 6, wherein the baking insert (150;250) is substantially solid.

9. A baking tray system comprising: a baking tray (110;210) as defined in any preceding claim comprising a frame (120) and a baking insert (150;250); and respective tools (300) for connecting and disconnecting the frame and the insert.

10. A baking system according to claim 9, wherein said tools comprise:
(c) at least one tool for connecting the tabs to the crossbars; and
(d) at least one tool for detaching the tabs from the crossbars.

11. A baking system according to claims 9 or 10 including a plurality of different interchangeable baking inserts such that an insert can be selected from the plurality and detachably connected to the frame.

12. A method of baking comprising providing a system according to any of claims 9 to 11 and producing a baking tray according to any of claims 1 to 8 by connecting a baking insert to a frame.

## Patentansprüche

1. Backblech (110,210), umfassend:
(a) einen Rahmen (120), der konfiguriert ist, einen Backeinsatz (150,250) zu lagern;
wobei der Rahmen (120) einen linken Abschnitt (122), einen rechten Abschnitt (130), einen vorderen Abschnitt (140) und einen hinteren Abschnitt (144) umfasst; und wobei der vordere und der hintere Abschnitt (140,144) jeweils einen Querstab (142,146) umfassen, der sich der Breite nach über den Rahmen (120) hinweg erstreckt; und
(b) einen Backeinsatz (150;250), wobei bestimmte Abschnitte (158,162;258,262) des Backeinsatzes vom Rahmen (124,132) aufgenommen sind, und wobei andere Abschnitte (166,170;266,270) des Backeinsatzes mit dem Rahmen lösbar verbunden sind; wobei die Backeinsätze (150;250) einen linken Abschnitt (156;256), einen rechten Abschnitt (160;260), einen vorderen Abschnitt (164;264) und einen hinteren Abschnitt (168;268) umfassen; **dadurch gekennzeichnet, dass** die äußersten Kanten des vorderen und des hinteren Abschnitts (164,168;264,268) des Backeinsatzes (150;250) jeweils mindestens eine darauf ausgebildete Nase (166) vor dem Anbringen des Backeinsatzes (150;250) am Rahmen (120) umfassen, wobei die Nase (166) ausgelegt ist, um einen jeweiligen Querstab (124,146) herum geklappt oder gecrimpt zu sein, um mit den Querstäben (142,146), die sich der Breite nach über den Rahmen hinweg erstrecken, abnehmbar in Eingriff zu sein.

2. Backblech (110;210) nach Anspruch 1, wobei der linke und der rechte Abschnitt (120,122) jeweils einen der Länge nach darin ausgebildeten Kanal (124,132) umfassen; und wobei der linke und der rechte Abschnitt (156,160;256,260) des Backeinsatzes (150;250) jeweils einen Klappbereich (158,162;258,262) umfassen, dessen Geometrie den in dem Rahmen der Länge nach ausgebildeten Kanälen (124,132) entspricht, sodass die Klappbereiche (158,162;258,262) in die jeweiligen Kanäle (124,132) im Rahmen (120) eingebracht werden können.

3. Backblech (110;210) nach Anspruch 1, wobei der Rahmen (120) ferner eine Vielzahl von darin ausgebildeten Vorsprüngen (126) und Vertiefungen umfasst, um ein sicheres Stapeln mit anderen Backblechen, die entsprechende Vorsprünge (128) und Vertiefungen aufweisen, zu ermöglichen.

4. Backblech nach Anspruch 3, wobei der linke und der rechte Abschnitt (122,130) des Rahmens jeweils den zumindest einen Vorsprung (126), der auf der obersten Oberfläche desselben ausgebildet ist, und die zumindest eine Vertiefung (128), die in der untersten Oberfläche desselben ausgebildet ist, umfassen.

5. Backblech 210) nach einem der vorangegangenen Ansprüche, wobei der Backeinsatz (250) eine darauf ausgebildete Einzel-Backfläche (252) aufweist.

6. Backblech (110) nach einem der Ansprüche 1 bis 4, wobei der Backeinsatz (150) eine Vielzahl von darin ausgebildeten, einzelnen Back-Untereinheiten (154) aufweist.

7. Backblech (110;210) nach einem der vorangegangenen Ansprüche, wobei der Backeinsatz (150;250) perforiert ist.

8. Backblech (110;210) nach einem der Ansprüche 1 bis 6, wobei der Backeinsatz (150;250) im Wesentlichen massiv ist.

9. Backblechsystem, umfassend: ein Backblech (110;210), wie dieses in einem der vorangegangenen Ansprüche definiert ist, das einen Rahmen (120) und einen Backeinsatz (150;250), und jeweilige Werkzeuge (300) zum Verbinden und Lösen des Rahmens und des Einsatzes umfasst.

10. Backsystem gemäß Anspruch 9, wobei die Werkzeuge Folgendes umfassen:
(c) mindestens ein Werkzeug zum Verbinden der Nasen mit den Querstäben; und
(d) mindestens ein Werkzeug zum Lösen der Nasen von den Querstäben.

11. Backsystem gemäß Ansprüchen 9 oder 10, umfassend eine Vielzahl von unterschiedlichen, untereinander austauschbaren Backeinsätzen, sodass ein Einsatz aus der Vielzahl auswählbar und mit dem Rahmen lösbar verbindbar ist.

12. Backverfahren, umfassend ein Bereitstellen eines Systems gemäß einem der Ansprüche 9 oder 11 und ein Herstellen eines Backblechs gemäß einem der Ansprüche 1 bis 8 durch Verbinden eines Backeinsatzes mit einem Rahmen.

## Revendications

1. Plateau de cuisson (110, 210) comprenant :
(a) un bâti (120) configuré pour supporter un insert de cuisson (150, 250) ;
dans lequel ledit bâti (120) comprend une partie gauche (122), une partie droite (130), une partie avant (140) et une partie arrière (144) ; et dans lequel les parties avant et arrière (140, 144) comprennent chacune une traverse (142, 146) s'étendant dans le sens de la largeur d'un côté à l'autre du bâti (120) ; et
(b) un insert de cuisson (150 ; 250), dans lequel certaines parties (158, 162 ; 258, 262) de l'insert de cuisson sont reçues par le bâti (124, 132) et dans lequel les autres parties (166, 170, 266, 270) de l'insert de cuisson sont raccordées, de manière détachable, au bâti ; dans lequel lesdits inserts de cuisson (150 ; 250) comprennent une partie gauche (156 ; 256), une partie droite (160 ; 260), une partie avant (164 ; 264) et une partie arrière (168 ; 268) ; **caractérisé en ce que** les bords situés le plus à l'extrémité des parties avant et arrière (164, 168 ; 264, 268) de l'insert de cuisson (150, 250) comprennent chacune au moins une languette (166) formée sur ces dernières avant la fixation de l'insert de cuisson (150 ; 250) sur le bâti (120), laquelle languette (166) est adaptée pour être pliée ou sertie autour d'une traverse (142, 146) respective pour mettre en prise, de manière amovible, lesdites traverses (142, 146) s'étendant dans le sens de la largeur, d'un côté à l'autre du bâti.

2. Plateau de cuisson (110 ; 210) selon la revendication 1, dans lequel les parties gauche et droite (120, 122) comprennent chacune un canal (124, 132) formé dans le sens de la largeur à l'intérieur de ces dernières ; et dans lequel les parties gauche et droite (156, 160 ; 256, 260) de l'insert de cuisson (150 ; 250) comprennent chacune une région pliée (158, 162 ; 258, 262) dont la géométrie correspond aux canaux (124, 132) formés dans le sens de la largeur dans le bâti, de sorte que les régions pliées (158, 162 ; 258, 262) peuvent être insérées dans les canaux (124, 132) correspondants dans le bâti (120).

3. Plateau de cuisson (110 ; 210) selon la revendication 1, dans lequel le bâti (120) comprend en outre une pluralité de saillies (126) et des indentations (126) formées à l'intérieur de ce dernier, pour permettre au plateau de cuisson de s'empiler en toute sécurité avec d'autres plateaux de cuisson ayant des saillies (128) et des indentations correspondantes.

4. Plateau de cuisson selon la revendication 3, dans lequel les parties gauche et droite (122, 130) du bâti comprennent chacune au moins l'une desdites saillies (126) formées sur sa surface la plus haute, et au moins l'une desdites indentations (128) formées dans sa surface la plus basse.

5. Plateau de cuisson (210) selon l'une quelconque des revendications précédentes, dans lequel l'insert de cuisson (250) a une seule surface de cuisson (252) formée sur ce dernier.

6. Plateau de cuisson (110) selon l'une quelconque des revendications 1 à 4, dans lequel l'insert de cuisson (150) a une pluralité d'unités auxiliaires de cuisson (154) individuelles formées dans ce dernier.

7. Plateau de cuisson (110 ; 210) selon l'une quelconque des revendications précédentes, dans lequel l'insert de cuisson (150 ; 250) est perforé.

8. Plateau de cuisson (110 ; 210) selon l'une quelconque des revendications 1 à 6, dans lequel l'insert de cuisson (150 ; 250) est sensiblement solide.

9. Système de plateau de cuisson comprenant : un plateau de cuisson (110 ; 210) selon l'une quelconque des revendications précédentes, comprenant un bâti (120) et un insert de cuisson (150 ; 250) ; et des outils (300) respectifs pour le raccordement et la déconnexion du bâti et de l'insert.

10. Système de cuisson selon la revendication 9, dans lequel lesdits outils comprennent :
(c) au moins un outil pour raccorder les languettes aux traverses ; et
(d) au moins un outil pour détacher les languettes des traverses.

11. Système de cuisson selon les revendications 9 ou 10, comprenant une pluralité d'inserts de cuisson différents interchangeables de sorte qu'un insert peut être sélectionné dans la pluralité et être raccordé de manière détachable au bâti.

12. Procédé de cuisson comprenant l'étape consistant à prévoir un système selon l'une quelconque des revendications 9 à 11, et produire un plateau de cuisson selon l'une quelconque des revendications 1 à 8 en raccordant un insert de cuisson à un bâti.
